**Europäisches Patentamt**

**European Patent Office**

**Office européen des brevets**

(11) Veröffentlichungsnummer: **0 475 136 A1**

# (12) EUROPÄISCHE PATENTANMELDUNG

(21) Anmeldenummer: **91113970.7**

(22) Anmeldetag: **21.08.91**

(51) Int. Cl.5: **B62B 7/08**, B62B 9/10

(30) Priorität: **11.09.90 DE 4028759**

(43) Veröffentlichungstag der Anmeldung:
**18.03.92 Patentblatt 92/12**

(84) Benannte Vertragsstaaten:
**AT BE CH DE DK ES FR GB IT LI LU NL SE**

(71) Anmelder: **Horacek, Gregor**
**Eifelstrasse 5**
**W-5412 Ransbach-Baumbach(DE)**

(72) Erfinder: **Horacek, Gregor**
**Eifelstrasse 5**
**W-5412 Ransbach-Baumbach(DE)**

(74) Vertreter: **Ouermann, Helmut, Dipl.-Ing.**
**Postfach 6145 Gustav-Freytag-Strasse 25**
**W-6200 Wiesbaden(DE)**

(54) **Zusammenklappbarer Schiebestuhl.**

(57) Die Erfindung betrifft einen zusammenklappbaren Schiebestuhl mit einer Fußbankeinheit (25) mit beidseitig des Stuhles angeordneten vorderen und hinteren Streben (1, 4) zur Aufnahme von Vorder- und Hinterrädern (3, 6), sowie mit einem Schiebebügel (14), dessen seitliche Ansätze mit den beiden vorderen Streben (1) schwenkbar verbunden und in ausgeklappter Stellung des Schiebestuhles arretierbar sind. Die Ansätze (17) sind über die vorderstrebseitigen Lagerpunkte (16) verlängert und es greifen die hinteren Streben (4) an den Verlängerungen schwenkbar an, ferner verbinden Querstreben (2, 5) die vorderen bzw. hinteren Streben miteinander und es greifen beidseitig angeordnete Längsstreben (8) jeweils an den vorderen und hinteren Streben schwenkbar an.

Um bei einem Schiebestuhl der genannten Art ein einfaches, selbstätiges Einklappen der Fußbankaufnahme in die durch die vorderen und hinteren Streben des Schiebestuhles vorgegebene Faltebene zu ermöglichen, wird erfindungsgemäß vorgeschlagen, mindestens eine Betätigungsstange (29) für die verschwenkbar angeordnete Fußbankaufnahme (26) des Schiebestuhls vorzusehen, wobei die Betätigungsstange in einem Lagerteil (30) verschieblich gelagert ist, das mit einer der vorderen Streben schwenkbar verbunden ist, sowie die Betätigungsstange mit einer der hinteren Streben bewegungsschlüssig gekoppelt und relativ zu dieser verschwenkbar ist, sowie ein über die vordere Strebe überstehendes Stangenende der Betätigungsstange beabstandet zu der Schwenkachse (24) der Fußbankaufnahme an dieser angreift.

Fig. 1

Die Erfindung betrifft einen zusammenklappbaren Schiebestuhl mit einer Fußbankeinheit, mit beidseitig des Stuhles angeordneten vorderen und hinteren Streben zur Aufnahme von Vorder- und Hinterrädern, sowie mit einem Schiebebügel, dessen seitliche Ansätze mit den beiden vorderen Streben schwenkbar verbunden und in ausgeklappter Stellung des Schiebestuhles arretierbar sind, wobei die Ansätze über die vorderstrebseitigen Lagerpunkte verlängert sind und die hinteren Streben an den Verlängerungen schwenkbar angreifen, sowie Querstreben die die vorderen bzw. hinteren Streben miteinander verbinden, wobei ferner beidseitig angeordnete Längsstreben jeweils an den vorderen und hinteren Streben schwenkbar angreifen.

Ein derartiger, auf den Anmelder zurückgehender Schiebestuhl ist bekannt. Er findet insbesondere als Reha-Schiebestuhl für Jugendliche Verwendung und weist den besonderen Vorteil auf, daß er einfach hergestellt und montiert werden kann, und außerdem im zusammengeklappten Zustand sehr kompakt ist.

Schiebestühle sind üblicherweise mit einer Fußbank zum Abstellen der Füße des im Stuhl Sitzenden versehen, wobei die Befestigung der Fußbank an einer Fußbankaufnahme erfolgt. Es sind Schiebestühle bekannt, bei denen die Fußbankaufnahme durch die Vorderstreben gebildet wird. Bei solchen Schiebestühlen ist in aller Regel ein kompaktes Zusammenfalten sichergestellt, da die Vorderstreben in zusammengefaltetem Zustand des Schiebestuhls der allgemeinen Faltebene angehören. Nachteilig ist allerdings, daß die Fußbank aus therapeutischer Sicht nur in einer Position, das heißt bei einem Kniewinkel des Sitzenden von etwa 90° bezogen auf die Höhenverstellung, eine optimale Position zur Sitzfläche des Stuhlsitzes aufweist. Es sind ferner Schiebestühle bekannt, die diesen Nachteil dadurch eliminieren, daß die Fußbankaufnahme unterhalb der Sitzvorderkante an einem Sitzplattenträger befestigt ist und zur Sitzfläche im rechten Winkel steht oder eingestellt werden kann, aber der winklig zu den Vorderstreben angeschweißte Sitzplattenträger bewirkt, daß bei festem Sitz- und Rückenteil des Sitzes dieser sich in zusammengefaltetem Zustand nicht in die allgemeine Faltebene einfügen kann. Es ist bei dem obengenannten Reha-Schiebestuhl des weiteren bekannt, die Fußbankeinheit unmittelbar am Sitz zu befestigen, wobei vor dem Zusammenklappen des Schiebestuhles die Fußbank in die Ebene der Fußbankaufnahme zu schwenken und dann diese manuell in die Ebene der Stützfläche des Sitzes zu schwenken ist.

Es ist Aufgabe der vorliegenden Erfindung, einen Schiebestuhl der genannten Art so weiter zu bilden, daß ein einfaches, selbsttätiges Einklappen der Fußbankaufnahme in die durch die vorderen und hinteren Streben des Schiebestuhles vorgegebene Faltebene möglich ist.

Der Schiebestuhl der genannten Art ist erfindungsgemäß gekennzeichnet durch mindestens eine Betätigungsstange für die verschwenkbar angeordnete Fußbankaufnahme des Schiebestuhls, wobei die Betätigungsstange in einem Lagerteil verschieblich gelagert ist, das mit einer der vorderen Streben schwenkbar verbunden ist, sowie die Betätigungsstange mit einer der hinteren Streben bewegungsschlüssig gekoppelt und relativ zu dieser verschwenkbar ist, mit einem über die vordere Strebe überstehenden Stangenende, das beabstandet zu der Schwenkachse der Fußbankaufnahme an dieser angreift.

Aufgrund der erfindungsgemäßen Ausbildung des Schiebestuhles führt eine Relativbewegung von jeweiliger hinterer und vorderer Strebe beim Einklappen des Schiebestuhles zu einer Bewegung der Fußbankaufnahme um deren Schwenkachse, wobei die Positionen der Schwenkpunkte der Streben und der Fußbankaufnahme bzw. der Angriffspunkt der Betätigungsstange an der Fußbankaufnahme so zu wählen sind, daß sich die Fußbankaufnahme nach abgeschlossenem Zusammenklappvorgang mit in die allgemeine Faltebene einpaßt.

Im erfindungsgemäßen Sinne ist es ausreichend, wenn nur eine Betätigungsstange vorgesehen ist, die sonst die um die Schwenkachse bewegliche Fußbankaufnahme stabilisiert und beim Zusammenklappen des Schiebestuhls in die allgemeine Klappebene bewegt. Auch muß die Betätigungsstange bzw. müssen die Betätigungsstangen nicht unbedingt mit der hinteren Strebe bzw. den hinteren Streben unmittelbar schwenkbar verbunden sein, es reicht aus, wenn diese bewegungsschlüssig mit der bzw. den hinteren Streben zusammenwirken. Eine vorteilhafter Ausgestaltung der Erfindung sieht allerdings vor, daß zwei Betätigungsstangen vorgesehen sind, wobei jeder vorderen Strebe auf den aufeinander zugeordneten Seiten ein Lagerteil für die Betätigungsstangen zugeordnet ist. Die Gestaltung des Schiebestuhles mit zwei Betätigungsstangen stellt eine verwindungsfreie Lagerung der Fußbankaufnahme bei auseinandergeklapptem Schiebestuhl sicher, die Anlenkung der Betätigungsstangen unmittelbar an den hinteren Streben ermöglicht die direkte, synchrone Übertragung der Bewegungen der hinteren Streben auf die Betätigungsstangen und damit auf die Fußbankaufnahme.

Gemäß einer besonderen Gestaltung des Schiebestuhles weist die jeweilige vordere Strebe ein Lageransatz auf, mit dem das Lagerteil schwenkbar verbunden ist, wobei das Lagerteil insbesondere als Lagerhülse ausgebildet ist. Mittels der Lagerhülsen, die die Betätigungsstangen durchsetzen, wobei der Außendurchmesser der rohrförmigen Betätigungsstangen auf den Innendurchmesser der Lagerhülsen abgestimmt ist, ergibt sich eine genaue Führung der Betätigungsstangen in den Lagerhülsen, wobei die schwenkbare Anordnung der Lagerhülsen in den Lageransätzen der vorderen Streben eine der jeweiligen Klapposition des Schiebestuhles entsprechende Schwenkposition der Lagerhülsen gestattet. Es ist hierdurch auf besonders einfache Art und Weise sichergestellt, daß die Verbindung der Betätigungsstangen mit den hinteren Streben die Funktion eines Festlagers und die Führung der Betätigungsstangen in den den vorderen Streben zugeordneten Lagerhülsen die Funktion eines Loslagers aufweist. Eine besonders hohe Steifigkeit des Klappstuhls im Bereich der Betätigungsstangen ergibt sich, wenn diese über die jeweiligen hinteren Streben überstehen und mittels eines Verbindungssteges miteinander verbunden sind. Die Betätigungsstangen und der Verbindungssteg bilden somit eine verbindungssteife, U-förmige Betätigungseinheit. Vorteilhaft greifen die vorderen Enden der Betätigungsstangen direkt oder indirekt an der Fußbankaufnahme beabstandet zu deren Schwenkachse an.

Eine besonders vorteilhafte Lagerung der Schwenkachse der Fußbankaufnahme ergibt sich, wenn zwischen beiden Lageransätzen der vorderen Streben ein Verbindungsrohr schwenkbar angeordnet ist, mit dem die Lagerhülsen fest verbunden sind, wobei parallel zum Verbindungsrohr die Schwenkachse für die Fußbankaufnahme angeordnet ist und die Schwenkachse kraftschlüssig mit dem Verbindungsrohr verbunden ist, sowie mittig mit diesem eine Führungshülse schwenkbar verbunden ist und in dieser eine Stützstange in beliebiger Stellung feststellbar geführt ist, deren Ende mit der Schwenkachse für die Fußbankaufnahme fest verbunden ist. Eine derartige Gestaltung ermöglicht nicht nur eine baulich einfache Lagerung der Schwenkachse der Fußbankaufnahme, sondern darüber hinaus eine Parallelverstellung der Schwenkachse zum Verbindungsrohr, so daß die Fußbankaufnahme bei auseinandergeklapptem Schiebestuhl unterschiedliche Betriebspositionen einnehmen kann. Zum Zusammenklappen des Schiebestuhles ist es allerdings erforderlich, daß die Fußbankaufnahme zuvor in einer auf die Klappgeometrie der Teile abgestimmte Normalstellung zurückgeschwenkt wird, aus der sie dann definiert in die allgemeine Klappebene einschwenken kann.

Vorteilhaft greifen die Betätigungsstangen mit ihren vorderen Enden mittelbar an der Fußbankaufnahme an, derart, daß die vorderen Enden der Betätigungsstangen mittels einer Lagerachse verbunden sind, die die Fußbankaufnahme beabstandet zu deren Schwenkachse durchsetzt. Bei einer Bewegung der Betätigungsstangen ziehen diese die Fußbankaufnahme um die Schwenkachse. Die Fußbankaufnahme sollte im wesentlichen aus zwei Rohren bestehen, die senkrecht zu ihrer Längserstreckung von der Lagerachse durchsetzt sind, wobei die Fußbank auf die Rohre aufsteckbar und mit diesen verbindbar ist. Hierzu sollte die Fußbank entsprechende auf den Innendurchmesser der Rohre der Fußbankaufnahme abgestimmte Zylinderansätze aufweisen und die Verbindung zwischen Fußbank und Fußbankaufnahme mittels Schnellschließverbindungen erfolgen. Die Fußbank sollte einen Schwenkmechanismus aufweisen, der bei Nichtgebrauch deren Schwenken in die Ebene der Fußbankaufnahme gestattet.

Gemäß einer besonderen Ausführungsform der Erfindung ist vorgesehen, daß die Lagerachse der schwenkbaren Aufnahme der Sitzfläche des Stuhlsitzes im Bereich der Sitzflächenvorderkante dient. Die Rückseite der Rückenlehne des Stuhlsitzes weist vorteilhaft einen Lagersteg auf, der schwenkbar mit dem Schiebebügel verbunden ist. Der Stuhlsitz selbst ist vorteilhaft als Faltsitz ausgebildet, das heißt er weist unabhängig voneinander eine starre Sitzfläche und eine starre Rückenlehne auf, die bei zusammengeklapptem Stuhlsitz im wesentlichen aufeinander zu liegen kommen.

Eine vorteilhafte Weiterbildung der Erfindung sieht vor, daß die vorderen und hinteren Streben in ausgeklappter Stellung des Schiebestuhles druckkraftübertragend aneinanderliegen. Es sind damit nicht nur über die Längsstreben die Bewegungen von vorderen und hinteren Streben beim Zusammen- bzw. Auseinanderklappen des Schiebestuhles zwangsgekoppelt, sondern es werden auch in den Schiebestuhl eingeleitete Gewichtskräfte, unabhängig davon, ob der Sitz des Schiebestuhles in den vorderen Streben und/oder hinteren Streben bzw. zusätzlich im Schiebebügel gelagert ist, unmittelbar in diese Teile eingeleitet und im wesentlichen direkt zu den Rädern fortgeführt. Die kräftemäßige Beanspruchung der Längsstreben ist dabei von untergeordneter Bedeutung, so daß deren Lagerbereiche nur gering beansprucht werden. Entsprechendes gilt für die Verbindungen von Schiebebügel und hinteren Streben aufgrund der Druckentlastung der hinteren Streben an den vorderen Streben. Zur Druckkraftübertragung ist die jeweilige hintere Strebe im Bereich deren oberen Endes zweckmäßig mit einer plattenförmigen Aufnahme versehen, die bei auseinandergeklapptem Schiebestuhl flächig an der vorderen Strebe anliegt.

Weitere Merkmale der Erfindung sind in der Beschreibung der Figuren dargestellt, wobei bemerkt wird, daß alle Merkmale sowie Kombinationen von Merkmalen erfindungswesentlich sind.

In den Figuren ist die Erfindung anhand einer Ausführungsform dargestellt, ohne auf diese beschränkt zu sein. Es stellt dar:

Figur 1　eine Seitenansicht des zusammenklappbaren Schiebestuhles, in schematischer Darstellung in ausgeklappter Position, mit angedeutetem Faltsitz,

Figur 2　eine Draufsicht des in Figur 1 gezeigten Schiebestuhles,

Figur 3　eine Seitenansicht des Schiebestuhles während des Zusammenklappvorganges,

Figur 4　eine Seitenansicht des Schiebestuhles in zusammengeklappter Position,

Figur 5　einen Schnitt durch den Schiebestuhl gemäß der Linie A-A in Figur 1 zur Verdeutlichung der Lagerung und Anlenkung der Fußbankaufnahme, gezeigt in ausgefahrener Stellung der Fußbankaufnahme (auseinandergeklappter Schiebestuhl),

Figur 6　einen Schnitt gemäß Figur 5, gezeigt bei eingefahrener Stellung der Fußbankaufnahme (zusammengeklappter Schiebestuhl),

Figur 7　eine Ansicht der mittels eines Verbindungsrohres verbundenen Lagerhülse, in der Rohrachse gesehen und

Figur 8　eine Ansicht B gemäß Figur 7.

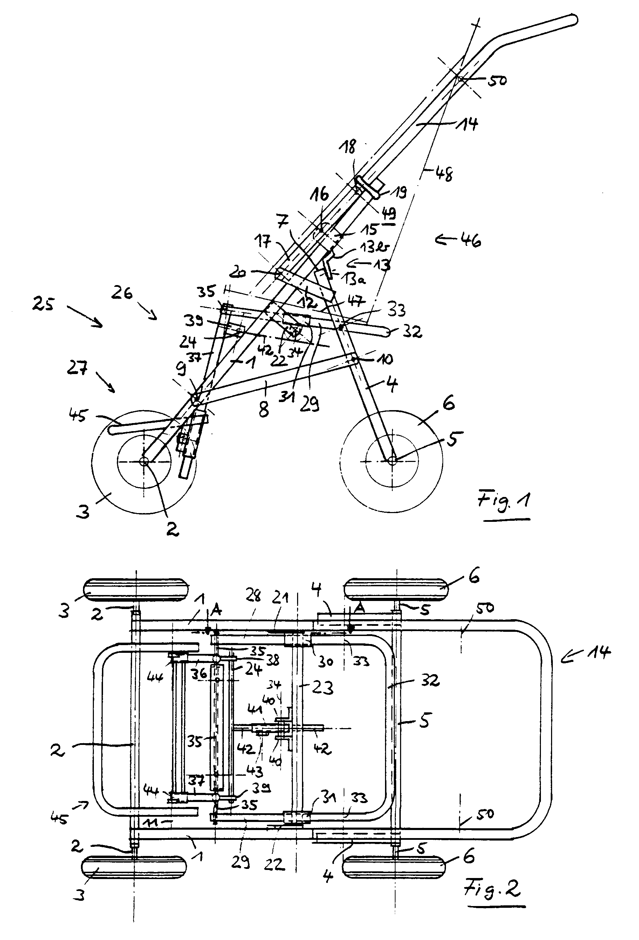

Die Figuren 1 und 2 zeigen die Rahmenteile des erfindungsgemäßen zusammenklappbaren Schiebestuhles. Zwei schräg nach unten und vorn geneigte vordere, als Rohre ausgebildete Streben 1 nehmen im Bereich ihrer unteren Enden eine mit diesen verbundene Lagerachse 2 für zwei Vorderräder 3 auf, die außerhalb des von den Streben 1 umschlossenen Raumes drehbar angeordnet sind. Entsprechend nehmen zwei schräg nach unten und hinten geneigte hintere, gleichfalls als Rohre ausgebildete Streben 4 im Bereich ihrer unteren Ende eine mit diesen verbundene Lagerachse 5 für zwei Hinterräder 6 auf, die außerhalb des von den Streben 4 umschlossenen Raumes drehbar angeordnet sind. Zwischen dem oberen Ende 7 der jeweiligen hinteren Strebe 4 und deren Lagerachse 5 greift außen an der jeweiligen hinteren Strebe 4 eine aus Flachstahl gebildete Längsstrebe 8 (in Figur 2 aus Gründen zeichnerischer Klarheit nicht gezeigt) mit derem einen Ende schwenkbar an. Die Längsstrebe 8 ist vorne geringfügig aus der Horizontalen (bezogen auf die Darstellung in der Figur 1) nach unten geneigt und greift mit derem vorderen Ende schwenkbar an der jeweiligen vorderen Strebe 1 an. Die Schwenkachsen der Längsstreben 8 verlaufen parallel zur Lagerachse 5, Bolzen 9 und 10 verdeutlichen deren Befestigungspunkte.

Mit der jeweiligen hinteren Strebe 4 ist im Bereich deren oberen Endes mit dieser eine Aufnahme 13 fest verbunden. Diese ist als Winkelansatz ausgebildet, dessen einer Schenkel 13a auf der dem jeweiligen Vorderrad 3 abgewandten Seite fest mit der jeweiligen hinteren Strebe 4 verbunden ist und geringfügig über deren oberes Ende 7 übersteht und deren anderer Schenkel 13b vom jeweiligen Vorderrad 3 weg weist und in Richtung der zugeordneten vorderen Strebe 1 orientiert ist, so daß diese am Schenkel 13b der Aufnahme 13 flächig anliegt. Das obere Ende 7 der jeweiligen hinteren Strebe 4 ist schließlich mit einem sich nach vorne erstreckenden, gegenüber der Horizontalen geringfügig nach oben geneigten Strebenansatz 12 (in Figur 2 nicht gezeigt) versehen. Dieser ist entsprechend den Längsstreben 8 als Flachstahl ausgebildet, der außen an der jeweiligen hinteren Strebe 4 fest mit dieser verbunden und außen an der zugeordneten vorderen Strebe 1 vorbeigeführt ist, so daß der Strebenansatz 12 vorne geringfügig über diese vordere Strebe 1 übersteht. Mit den beidseitig angeordneten Strebenansätzen 12 wirkt ein Schiebebügel 14 des Schiebestuhles zusammen. Dieser ist in üblicher Art und Weise U-förmig gebogen und aus einem Rohr gebildet, dessen beide Schenkelenden in mit den vorderen Streben 1 verbundenen Flanschlagern 15 schwenkbar gelagert sind. Hierzu sind die vorderen Streben 1 oben über die Aufnahmen 13 hinaus verlängert und es nimmt der untere Verlängerungsbereich der jeweiligen vorderen Strebe 1 das betreffende Flanschlager 15 auf. Auf der jeweiligen Aufnahme 13 abgewandten Seite der zugeordneten vorderen Strebe 1 ist das Flanschlager 15 mit einer Ausnehmung versehen, durch die ein Befestigungsbolzen 16 für den zugeordneten Schenkel des Schiebebügels 14 gesteckt ist. Außen ist in der Erstreckung des jeweiligen Schenkels des Schiebebügels 14 mit diesem eine Verlängerung 17 in Form eines Flachstahls verbunden, die gleichfalls mittels des Bolzens 16 gehalten ist, sowie ferner auf der dem jeweiligen Vorderrad 3 abgewandten Seite des Flanschlagers 15 durch einen weiteren beabstandet angeordneten Bolzen 18. In bekannter Art und Weise umschließt den jeweiligen Schenkel des Schiebebügels 14 ein Arretierring 19, der in seiner unteren Position auch die obere Verlängerung der jeweiligen vorderen Strebe 1 umschließt und damit in dieser Position ein auseinanderschwenken von Schiebebügel 14 und zugeordneter vorderer Strebe 1 wirksam verhindert. Im Bereich ihres unteren Endes ist die jeweilige Verlängerung 17 mittels eines weiteren Bolzen 20 mit dem vorderen Ende des jeweiligen Strebenansatzes 12 schwenkbar verbunden.

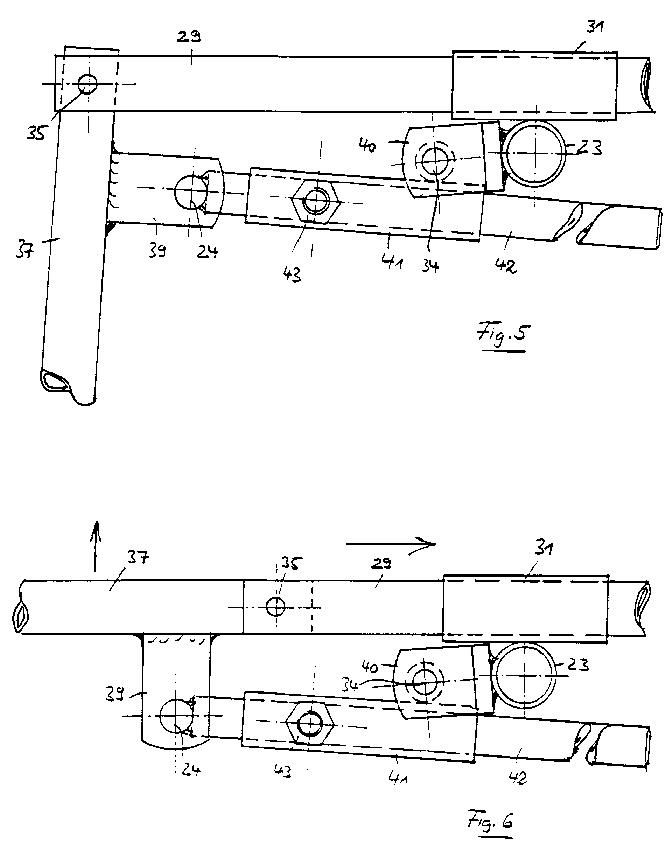

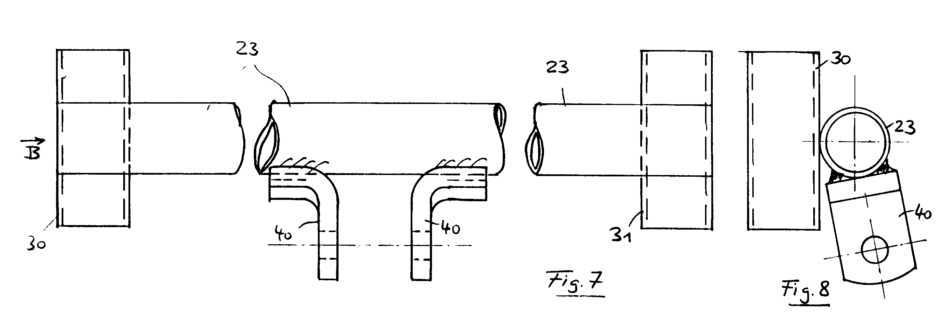

An den Innenseiten weist jede vordere Strebe 1 eine sich im rechten Winkel zu dieser im wesentlichen in Richtung des zugeordneten Hinterrades 6 erstreckende Lageransätze 21 bzw. 22 auf. Zwischen diesen ist ein Verbindungsrohr 23 schwenkbar angeordnet. Es dient einerseits dem Zweck, über eine mittige Lagerung die Schwenkachse 24 einer Fußbankeinheit, die aus einer Fußbankauflage 25 und einer Fußbank 27 besteht, zu fixieren, andererseits der Führung zweier Betätigungsstangen 28 bzw. 29, die mit ihren vorderen freien Ende beabstandet zur Schwenkachse 24 mittelbar an den oberen Enden der Betätigungsstangen 28 bzw. 29 angreifen und damit ein Schwenken der Fußbankauflage 26 um die Schwenkachse 24 gestatten. Im Detail, wobei zusätzlich auf die Darstellung der Figuren 5 und 7 Bezug genommen wird, ist mit jedem Verbindungsrohr 23 benachbart des zugeordneten Lageransatzes 21 bzw. 22 oben mit dem Verbindungsrohr 23 eine Lagerhülse 30 bzw. 31 verschweißt. In den Lagerhülsen 30 und 31 sind die Betätigungsstangen 28 und 29 geführt, das heißt deren Außendurchmesser ist geringfügig geringer als der Innendurchmesser der Lagerhülsen 30 und 31, wobei die Betätigungsstangen 28 und 29 im Bereich ihres den hinteren Streben 4 zugeordneten Endes mittels einer Verbindungsstange 32 verbunden sind und die Verbindung damit U-Form aufweist. Aufgrund der Lagerung der Verbindungsstangen 28 und 29 sind diese in den Lagerhülsen 30 und 31 längsverschieblich gelagert und darüber hinaus aufgrund der verschwenkbaren Lagerung des Verbindungsrohres 23 in den Lageransätzen 21 und 22 zusätzlich verschwenkbar; des weiteren ist die jeweilige Betätigungsstange 28 bzw. 29 mit der zugeordneten hinteren Strebe 4 mittels Bolzen 33 schwenkbar verbunden, was in der Darstellung der Figur 2 nur durch eine strichlierte Linie angedeutet ist. Die Bolzenverbindung fungiert damit quasi als Festlager für die Betätigungsstangen 28 und 29, während die Lagerhülsenverbindung das Loslager hierfür darstellt. Die vorderen Enden der Betätigungsstangen 28 und 29 sind mittels einer Lagerachse 35 miteinander verbunden, die die Fußbankaufnahme 26 beabstandet zu deren Schwenkachse 24 durchsetzt. Die Fußbankaufnahme 26 besteht im wesentlichen aus zwei Rohren 36 und 37, die senkrecht zu ihrer Längserstreckung von der Lagerachse 35 durchsetzt sind. In der Nähe der Lagerachse 35 verbindet eine nicht gezeigte Strebe die beiden Rohre 36 und 37 und stabilisiert diese damit. Die Schwenkachse 24 durchsetzt in Richtung der hinteren Streben 4 gerichtete Lageransätze 38 bzw. 39, womit die Schwenkachse 24 parallel zu der durch die beiden Rohre 36 und 37 gebildeten Ebene zu liegen kommt. Die kraftschlüssige Verbindung zwischen der Schwenkachse 24 und dem Verbindungsrohr 23 erfolgt dadurch, daß im Bereich der Mitte des Verbindungsrohres mit diesem verbundene Flanschansätze 40 zwischen sich über einen axial fixierten Bolzen 34 eine Führungshülse 41 schwenkbar aufnehmen, in der eine Stützstange 42 in beliebiger Stellung feststellbar geführt ist, deren Ende mit der Schwenkachse 24 der Fußbankaufnahme 26 fest verbunden ist. Die Arretierung der Stützstange 42 erfolgt dabei zweckmäßig durch eine in die Führungshülse 41 einschraubbarer Klemmschraube 43.

Die Fußbank 27 weist zwei Lagerhülsen 44 auf, die auf die Rohre 36 und 37 steckbar und mit diesen über eine jeder Lagerhülse 44 zugeordnete, nicht näher gezeigte Arretierungsschraube in beliebiger Stellung feststellbar ist. In den Lagerhülsen 44 ist ein zu den hinteren Streben 4 offener, U-förmiger Rahmen 45 schwenkbar gelagert, wobei die Schwenkachse 11 im Bereich der freien Enden des Rahmens 45 positioniert ist. Im lichten Raum des Rahmens 45 ist ein nicht näher gezeigtes Fußbrett angeordnet und mit dem Rahmen 45 befestigt, ein weiteres, gleichfalls nicht näher gezeigtes, den Fersen des im Schiebestuhl Sitzenden zugeordnetes Fußbrett ist zwischen den Lagerhülsen 44 und oberhalb dieser in der Ebene der Rohre 36 und 37 zwischen den Lagerhülsen 44 gehalten. Nicht näher gezeigte Anschläge an den Lagerhülsen 44 stellen sicher, daß das dem Rahmen 45 zugeordnete Fußbrett nur zwischen einer eingeklappten Position in der Ebene der beiden Rohre 36 und 37 und einer senkrecht hierzu angeordneten, nach vorne sich erstreckenden, ausgeklappten Stellung verschwenkt werden kann.

Die Befestigung des in der Figur 1 nur mittels strichpunktierter Linien angedeuteten Faltsitzes 46 erfolgt im Bereich des Schiebebügels 14 und der Lagerachse 35. Der Faltsitz 46 besteht im wesentlichen aus einem starren Sitzteil 47 und einer separat hierzu angeordneten starren Rückenlehne 48, wobei die Teile 47 und 48 in einem flexiblen Schalenteil gehalten sind, beispielsweise in eine Folie eingenäht sind, wobei das Schalenteil überdies zwei dreieckförmige Seitenteile 49 aufweist. Im Bereich des vorderen Endes des Sitzteiles 47 ist dieses an seiner Unterseite mit einem nicht gezeigten Lagerflansch verbunden, der sich weitgehend über die gesamte Breite des Sitzes erstreckt und im Seitenbereich des Sitzes nach unten gerichtete Abkröpfungen aufweist, die die Lagerachse 35 für die Fußbankauflage 26 durchsetzt. Im oberen Bereich der Rückenlehne 48 ist diese auf ihrer Rückseite mit einer Lagerplatte verbunden, die seitlich über die Rückenlehne 48 steht und deren freien Enden Lagerzapfen 50 aufweisen, die schwenkbar im Schiebebügel 14 in dessen oberem Bereich gelagert sind. Bei auseinandergeklapptem Schiebestuhl spannen das Sitzteil 49 und die Rückenlehne 48 die beiden Seitenteile 49, womit die Formstabilität des Faltsitzes 46 gegeben ist. Im Sitz selbst kann ein entsprechend der Form des Faltsitzes ausgebildeter gepolsteter Einlegesitz vorgesehen sein, der beispielsweise mittels mehrerer Klettverschlüsse mit dem Faltsitz 46 verbindbar ist.

Wie insbesondere der Figur 2 zu entnehmen ist, sind die beiden vorderen Streben 1, die beiden hinteren Streben 4 und die Schenkel des Schiebebügels 14 in zwei parallel zueinander angeordneten Ebenen schwenkbar. Die die genannten Teile verbindenden beiden Längsstäbe 8, die beiden Strebenansätze 12 und die beiden Verlängerungen 17 sind hingegen als Flachstähle ausgebildet, die in unmittelbarer Nachbarschaft zu den zuvor genannten Teilen in zwei parallel zu deren Schwenkebenen angeordneten Ebenen schwenkbar sind, so daß der Raum zwischen den jeweiligen vorderen Streben 1, hinteren Streben 4 und den Schenkeln des Schiebebügels 14, der vom Faltsitz 46 eingenommen wird, durch die Teile nicht tangiert wird. Dies ermöglicht es, den Schiebestuhl zusammen mit dem Faltsitz zusammenzuklappen und auch wieder auseinanderzuklappen.

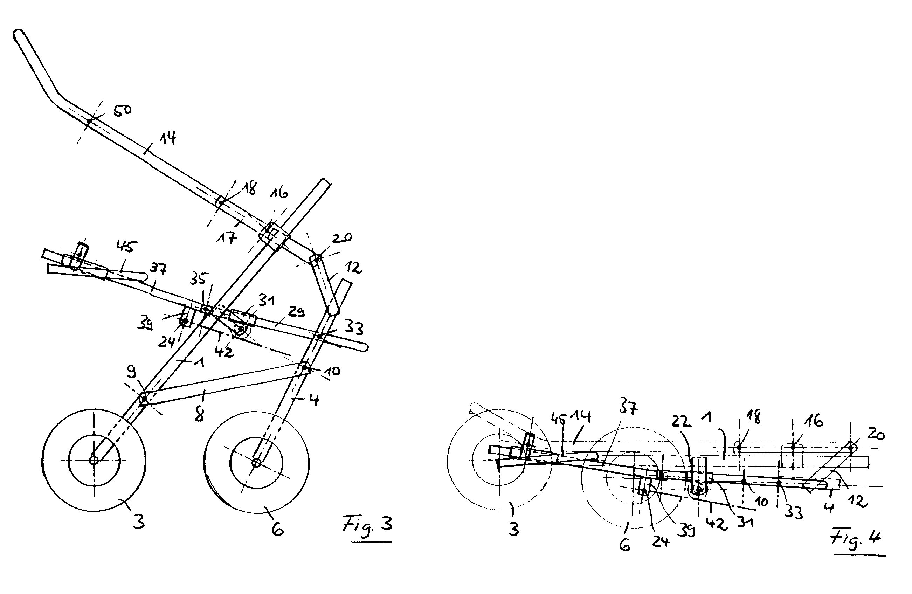

Figur 3 verdeutlicht den Schiebestuhl nach dem Einklappen der Fußbank 27 im wesentlichen in die Ebene der Fußbankaufnahme 26, ferner nach dem Lösen der dort nicht gezeigten Arretierung 19 und dem Verschwenken des Schiebebügels 14 um die Achse 16 von den vorderen Streben 1 weg. Da die Schenkel des Schiebebügels 14 mit den beiden Verlängerungen 17 eine starre Einheit bilden, wirkt der Schiebebügel 14 unmittelbar über die beiden Strebenansätze 12 auf die beiden hinteren Streben 4. Bei dieser Bewegung des Schiebebügels 14 schwenkt der freischwingend gelagerte Hinterrahmen um die durch die Bolzen 10 vorgegebene Achse und ferner zusammen mit den Längsstreben 8 um die durch die Bolzen 9 vorgegebene vorderstrebseitige Achse, wobei die Längsstreben 8 zunächst bis zum Erreichen der gestreckten Position von Verlängerungen 17 und Strebenansätzen 12 im Uhrzeigersinn um die durch die Bolzen 9 vorgegebene Achse schwenken. Beim in Figur 3 gezeigten Überstrecken bewegen sich dann die Längsstreben 8 entgegen dem Uhrzeigersinn und bewirken eine zunehmende Annäherung von Vorderräder 3 und Hinterräder 6 sowie eine fortschreitende Parallelität der vorderen Streben 1 und der hinteren Streben 4. Während dieses Bewegungsablaufes ziehen die mit der hinteren Strebe 4 zwar schwenkbar, aber ansonsten fest verbundenen Betätigungsstangen 28 und 29 die Fußbankaufnahme 26 im Uhrzeigersinn um deren Schwenkachse 24 in die allgemeine Faltebene der Streben 1 und 4. Geführt werden die Betätigungsstangen 28 und 29 dabei mittels der Lagerhülsen 30 und 31. Die Kinematik der vorderen und hinteren Streben 1 und 4, der Längsstreben 8, der Betätigungsstangen 28 und 29 sowie deren Angriffspunkt an der Fußbankauflage 26 sowie die Schwenkachse 24 der Fußbankauflage 26 sind so abgestimmt, daß das Einschwenken der Fußbankauflage 26 in die allgemeine Faltebene ausgehend von der in Figur 1 gezeigten Stellung erfolgt. Sollte die Fußbankauflage 26 bei auseinandergefaltetem Zustand des Schiebesitzes nicht dessen in Figur 1 gezeigter, weitgehend vertikal orientierter Normallage entsprechen, sondern mehr in der Horizontalen verlaufen, müßte die Fußbankauflage 26 vor dem Zusammenklappen in die Normallage zurückgestellt werden. In der in Figur 4 gezeigten vollständig eingeklappten Stellung des Schiebestuhls, bei der die Schenkel des Schiebebügels 14 parallel zu den vorderen Streben 1 orientiert sind, ist nicht nur eine weitgehende Parallelität zu den hinteren Streben 4 gegeben, sondern es befindet sich in dieser Ebene auch die mit vollständig ausgezogenen Linien gezeigte Fußbankeinheit 25. Der Schiebestuhl stellt sich in diesem Zustand als weitgehend flaches Gebilde dar.

**Bezugszeichenliste**

| | |
|---|---|
| 1 | vordere Strebe |
| 2 | Lagerachse |
| 3 | Vorderrad |
| 4 | hintere Strebe |
| 5 | Lagerachse |
| 6 | Hinterrad |
| 7 | oberes Ende |
| 8 | Längsstrebe |
| 9 | Bolzen |
| 10 | Bolzen |
| 11 | Schwenkachse |
| 12 | Strebenansatz |
| 13 | Aufnahme |
| 13a | Schenkel |
| 13b | Schenkel |
| 14 | Schiebebügel |
| 15 | Flanschlager |
| 16 | Bolzen |
| 17 | Verlängerung |
| 18 | Bolzen |
| 19 | Arretierung |
| 20 | Bolzen |
| 21 | Lageransatz |
| 22 | Lageransatz |
| 23 | Verbindungsrohr |
| 24 | Schwenkachse |
| 25 | Fußbankeinheit |
| 26 | Fußbankaufnahme |
| 27 | Fußbank |
| 28 | Betätigungsstange |
| 29 | Betätigungsstange |
| 30 | Lagerhülse |
| 31 | Lagerhülse |
| 32 | Verbindungsstange |
| 33 | Bolzen |
| 34 | Bolzen |

| 35 | Lagerachse |
| 36 | Rohr |
| 37 | Rohr |
| 38 | Lageransatz |
| 39 | Lageransatz |
| 40 | Flanschansatz |
| 41 | Führungshülse |
| 42 | Stützstange |
| 43 | Klemmschraube |
| 44 | Lagerhülse |
| 45 | Rahmen |
| 46 | Faltsitz |
| 47 | Sitzteil |
| 48 | Rückenlehne |
| 49 | Seitenteil |
| 50 | Lagerzapfen |

**Patentansprüche**

1. Zusammenklappbarer Schiebestuhl mit einer Fußbankeinheit, mit beidseitig des Stuhles angeordneten vorderen und hinteren Streben zur Aufnahme von Vorder- und Hinterrädern, sowie mit einem Schiebebügel, dessen seitliche Ansätze mit den beiden vorderen Streben schwenkbar verbunden und in ausgeklappter Stellung des Schiebestuhles arretierbar sind, wobei die Ansätze über die vorderstrebseitigen Lagerpunkte verlängert sind und die hinteren Streben an den Verlängerungen schwenkbar angreifen, sowie Querstreben die vorderen bzw. hinteren Streben miteinander verbinden, wobei ferner beidseitig angeordnete Längsstreben jeweils an den vorderen und hinteren Streben schwenkbar angreifen, **gekennzeichnet** durch mindestens eine Betätigungsstange (28; 29) für eine verschwenkbar angeordnete Fußbankaufnahme (26) des Schiebestuhls, wobei die Betätigungsstange (28; 29) in einem Lagerteil (30; 31) verschieblich gelagert ist, das mit einer der vorderen Streben (1) schwenkbar verbunden ist, sowie die Betätigungsstange (28; 29) mit einer der hinteren Streben (4) bewegungsschlüssig gekoppelt und relativ zu dieser verschwenkbar ist, mit einem über die vordere Strebe (1) überstehenden Stangenende, das beabstandet zu der Schwenkachse (24) der Fußbankaufnahme (26) an dieser angreift.

2. Schiebestuhl nach Anspruch 1, **dadurch gekennzeichnet,** daß zwei Betätigungsstangen (28, 29) vorgesehen sind, wobei jeder vorderen Strebe (1) auf den einander zugerichteten Seiten ein Lagerteil (30, 31) für die Betätigungsstangen (28, 29) zugeordnet ist.

3. Schiebestuhl nach Anspruch 2, **dadurch ge-**
**kennzeichnet,** daß die jeweilige vordere Strebe (1) einen Lageransatz (21, 22) aufweist, mit dem das Lagerteil schwenkbar verbunden ist, wobei das Lagerteil insbesondere als Lagerhülse (30, 31) ausgebildet ist.

4. Schiebestuhl nach Anspruch 2 oder 3, **dadurch gekennzeichnet,** daß die jeweilige Betätigungsstangen (28, 29) mit der hinteren Strebe (4) schwenkbar verbunden ist.

5. Schiebestuhl nach einem der Ansprüche 2 bis 4, **dadurch gekennzeichnet,** daß die Betätigungsstangen (28, 29) über die jeweilige hintere Strebe (4) überstehen und mittels einer Verbindungsstange (32) miteinander verbunden sind.

6. Schiebestuhl nach einem der Ansprüche 2 bis 5, **dadurch gekennzeichnet,** daß die vorderen Enden der Betätigungsstangen (28, 29) an der Fußbankaufnahme (26) angreifen.

7. Schiebestuhl nach einem der Ansprüche 3 bis 6, **dadurch gekennzeichnet,** daß zwischen beiden Lageransätzen (21, 22) ein Verbindungsrohr (23) schwenkbar angeordnet ist, mit dem die Lagerhülsen (30, 31) fest verbunden sind, wobei parallel zum Verbindungsrohr (23) die Schwenkachse (24) für die Fußbankaufnahme (26) angeordnet ist und die Schwenkachse (24) kraftschlüssig mit dem Verbindungsrohr (23) verbunden ist.

8. Schiebestuhl nach Anspruch 7, **dadurch gekennzeichnet,** daß mit dem Verbindungsrohr (23) mittig eine Führungshülse (41) schwenkbar verbunden ist und in dieser eine Stützstange (42) in beliebiger Stellung feststellbar geführt ist, deren Ende mit der Schwenkachse (24) für die Fußbankaufnahme (26) fest verbunden ist.

9. Schiebestuhl nach einem der Ansprüche 1 bis 8, **dadurch gekennzeichnet,** daß die vorderen Enden der Betätigungsstangen (28, 29) mittels einer Lagerachse (35) verbunden sind, die die Fußbankaufnahme (26) beabstandet zu deren Schwenkachse (24) durchsetzt.

10. Schiebestuhl nach einem der Ansprüche 1 bis 9, **dadurch gekennzeichnet,** daß die Fußbankaufnahme (26) im wesentlichen aus zwei Rohren (36, 37) besteht, die senkrecht zu ihrer Längserstreckung von der Lagerachse (35) durchsetzt werden, wobei eine Fußbank (27) auf die Rohre (36, 37) aufsteckbar und mit diesen verbindbar ist.

11. Schiebestuhl nach Anspruch 9 oder 10, **dadurch gekennzeichnet,** daß die Lagerachse (35) der schwenkbaren Aufnahme des Sitzteiles (47) des Stuhlsitzes (47) im Bereich der Sitzteilvorderkante dient, wobei der Stuhlsitz insbesonere als Faltsitz (46) ausgebildet ist.

12. Schiebestuhl nach Anspruch 10, **dadurch gekennzeichnet,** daß die Rückenlehne (48) des Stuhlsitzes (46) einen Lagersteg aufweist, der schwenkbar mit dem Schiebebügel (14) verbunden ist.

13. Schiebestuhl nach einem der Ansprüche 1 bis 12, **dadurch gekennzeichnet,** daß die vorderen und hinteren Streben (1, 4) in ausgeklappter Stellung des Schiebestuhles druckkraftübertragend aneinanderliegen.

Fig. 1

Fig. 2

Fig. 4

Fig. 3

Fig. 5

Fig. 6

Fig. 7

Fig. 8

EP 0 475 136 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-3 873 116 (PEREGO-PINES S.P.A.) <br> * das ganze Dokument * <br> --- | 1,10,12 | B62B7/08 <br> B62B9/10 |
| A | US-A-2 410 797 (E.ALLENBAUGH) <br> * Spalte 4, Zeile 27 - Spalte 5, Zeile 27; Abbildungen 1-3 * <br> --- | 1,10,11 | |
| A | US-A-1 703 208 (J.PINHEIRO) <br> * das ganze Dokument * <br> --- | 1,10,11 | |
| A | GB-A-976 891 (HUBCAR LTD.) <br> * Seite 3, Zeile 31 - Zeile 99; Abbildungen 1-3 * <br> --- | 1,10 | |
| A | FR-A-2 405 167 (PEREGO-PINES S.P.A.) <br> * das ganze Dokument * <br> ----- | 1,10-12 | |

**RECHERCHIERTE SACHGEBIETE (Int. Cl.5 )**

B62B

Der vorliegende Recherchenbericht wurde für alle Patentansprüche erstellt

| Recherchenort | Abschlußdatum der Recherche | Prüfer |
|---|---|---|
| DEN HAAG | 12 DEZEMBER 1991 | CZAJKOWSKI A.R. |